# EUROPÄISCHE PATENTSCHRIFT

(11) **EP 4 058 694 B1**
(45) Veröffentlichungstag und Bekanntmachung des Hinweises auf die Patenterteilung: **25.03.2026**
(21) Anmeldenummer: 20804501.3
(22) Anmeldetag: 10.11.2020
(51) Int. Cl.: F16H 63/34, F16H 61/32

(54) **AKTUATOR UND VORRICHTUNG ZUM EINLEGEN EINER PARKSPERRE EINES KRAFTFAHRZEUGAUTOMATIKGETRIEBES MIT EINEM DERARTIGEN AKTUATOR SOWIE EIN DAMIT AUSGESTATTETES KRAFTFAHRZEUG**
ACTUATOR, AND DEVICE FOR ENGAGING A PARKING LOCK OF A MOTOR-VEHICLE AUTOMATIC TRANSMISSION HAVING SUCH AN ACTUATOR, AND MOTOR VEHICLE EQUIPPED THEREWITH
ACTIONNEUR ET DISPOSITIF POUR ACTIONNER UN FREIN DE STATIONNEMENT D'UNE BOÎTE DE VITESSES AUTOMATIQUE DE VÉHICULE AUTOMOBILE À L'AIDE D'UN ACTIONNEUR DE CE TYPE AINSI QUE VÉHICULE AUTOMOBILE ÉQUIPÉ DE CE DISPOSITIF

(30) Priorität: 11.11.2019 DE 102019130359
(43) Veröffentlichungstag der Anmeldung: 21.09.2022
(73) Patentinhaber: Küster Holding GmbH, 35630 Ehringshausen (DE)
(72) Erfinder: ENGEL, René, 35614 Asslar (DE); SCHMIDT, Thomas, 35630 Ehringshausen (DE)
(74) Vertreter: Weckenbrock, Matthias
(86) Internationale Anmeldenummer: PCT/EP2020/081562
(87) Internationale Veröffentlichungsnummer: WO 2021/094275

(56) Entgegenhaltungen:
- EP-A1- 3 181 957
- EP-A1- 3 545 216
- DE-A1- 102010 053 505
- DE-A1- 102014 219 037
- DE-A1- 102016 224 660
- DE-A1- 102017 218 638

## Beschreibung

Die Erfindung betrifft einen Aktuator nach dem Oberbegriff des Patentanspruchs 1. Weiterhin betrifft die Erfindung eine Vorrichtung zum Aktivieren einer Parksperre eines Kraftfahrzeugautomatikgetriebes gemäß Patentanspruch 13 sowie ein damit ausgestattetes Kraftfahrzeug gemäß Anspruch 14.

Der Einsatz von automatischen Schaltbetätigungen beziehungsweise Shift-by-Wire-Systemen in Kraftfahrzeugen bietet gegenüber mechanisch gekoppelten Schaltbetätigungen einige Vorteile. So können beispielsweise die Schaltstufen des Getriebes flexibel und in Abhängigkeit des Fahrzeugzustandes per Software gewählt werden. Auch das Aktivieren der Parksperre durch Einlegen der P-Stufe erfolgt hierbei nicht mehr manuell durch den Fahrer, sondern wird durch die Steuerungssoftware, zum Beispiel beim Anhalten oder beim Verlassen des Fahrzeuges, automatisch sichergestellt. Da ein Einlegen der P-Stufe zum Aktivieren der Parksperre vor dem Verlassen des Kraftfahrzeuges aus Sicherheitsgründen zwingend erforderlich ist, verfügen derartige Systeme und Aktuatoren über Notfallmechanismen, die auch bei Störungen des Aktuators oder bei Spannungsausfall ein Einlegen der P-Stufe gewährleisten sollen. Diese Notfallmechanismen arbeiten typischerweise mit Energiespeichern, wie zum Beispiel mechanischen Federelementen, welche unabhängig vom Aktuator etwa das Einlegen einer mechanischen Notposition sicherstellen.

Ein Aktuator ist aus der DE 10 2011 014 815 A1 bekannt. Darin wird ein Kraftfahrzeugparksperrenaktuator mit zumindest einer Spindel beschrieben, bei dem aus einer rotatorischen Bewegung eines Motors eine Längsbewegung zum automatischen Schalten einer Getriebestufe realisiert wird. Die Notfallfunktion zum Einlegen der Parksperre wird hierbei durch ein Federelement realisiert, welches durch das Betätigen der Nichtparkstellung des Aktuators vorgespannt und durch eine Verrastung mechanisch gehalten wird. Eine Schaltfunktion zum Auslösen des Notfallmechanismus zum Einlegen der P-Stufe soll durch eine vom Aktuator unabhängige Spannungsquelle erfolgen. Nachteilig bei diesem Aktuator ist allerdings, dass zum Auslösen des Notfallmechanismus eine unabhängige Spannungsquelle benötigt wird. Daher kann die P-Stufe nicht eingelegt werden, wenn die unabhängige Spannungsquelle ebenfalls nicht zur Verfügung steht, was insbesondere dann vorkommen kann, wenn der Akkumulator des Kraftfahrzeuges entladen ist und auch keine sonstige Spannungsquelle, wie beispielsweise ein ordnungsgemäß funktionierender Generator zur Verfügung steht.

Weiterhin muss bei dem Aktuator der DE 10 2011 014 815 A1 zum Vorspannen des Federelementes die P-Stufe verlassen werden, wodurch eine ungewollte und unsichere Fahrzeugsituation entsteht, weil die P-Stufe des Getriebes verlassen wird, obwohl der Notfallmechanismus noch nicht zur Verfügung steht.

Aus der DE 100 45 953 B4 ist eine Parksperrvorrichtung bekannt, die insbesondere für ein mit einem automatisiert steuerbaren Getriebe versehenes Kraftfahrzeug vorgesehen ist. Die Parksperrvorrichtung weist eine Betätigungsvorrichtung auf, die ein Betätigungselement zur Betätigung einer Parksperre, einen Federspeicher zur Aktivierung der Parksperre, einen steuerbaren Stellantrieb zur Deaktivierung der Parksperre und eine Sperrvorrichtung zur Arretierung der Parksperre im deaktivierten Zustand umfasst. Der Stellantrieb ist elektromechanisch wirksam ausgebildet und mit einem Hauptbetätigungshebel verbunden. Der Federspeicher, der Stellantrieb und die Sperrvorrichtung sind über den Hauptbetätigungshebel mit dem Betätigungselement in Verbindung bzw. in Wirkverbindung bringbar.

DE 10 2017 218 638 A1 betrifft eine Betätigungsvorrichtung für eine Parksperre für ein Kraftfahrzeug.

Auch aus der DE 10 2016 224 660 A1 und der DE 10 2014 219 037 A1 sind Betätigungsanordnungen für eine Parksperre für ein Kraftfahrzeug bekannt.

Die EP 3 545 216 A1 betrifft eine Entsperrvorrichtung zum Entsperren einer Parksperre eines Fahrzeugs.

Aus der EP 3 181 957 A1 ist ein Steuerungssystem für eine Shift-by-Wire-Schaltung mit Entsperrung des Parkmodus bekannt.

Die WO 2017/182555 A (die als Basis für den Oberbegriff des Anspruchs 1 dient) betrifft einen Aktuator mit einem eine Antriebswelle antreibenden Antrieb, einem mit der Antriebswelle in Wirkverbindung stehendes erstes Betätigungselement zum Betätigen einer Schalteinrichtung, einem Federelement, welches einerseits an einem Gehäusebauteil des Aktuators abstützbar ist und sich anderseits an einem zum Spannen des Federelementes ausgebildeten zweiten Betätigungselement abstützt.

Aufgabe der Erfindung ist es daher, einen Aktuator nach dem Oberbegriff des Patentanspruchs 1 derart weiterzubilden, dass gewährleistet ist, dass in allen Situationen, insbesondere beim Ausfall der Spannungsversorgung, ein Betätigungselement zum Betätigen einer Schaltvorrichtung des Aktuators automatisiert in seine Ausgangsstellung zurückgeführt wird. Ferner ist es Aufgabe der Erfindung, eine Vorrichtung zum Ein- oder Auslegen einer Parksperre eines Kraftfahrzeugautomatikgetriebes mit einem derartigen Aktuator sowie ein verbessertes Kraftfahrzeug zur Verfügung zu stellen. Darüber hinaus ist es Aufgabe der Erfindung, dass der Aktuator bzw. die Vorrichtung in eine Vielzahl von Kraftfahrzeugen mit unterschiedlichen Automatikgetrieben und/oder von unterschiedlichen Herstellern einsetzbar ist.

Hinsichtlich des Aktuators wird diese Aufgabe gelöst durch einen Aktuator mit allen Merkmalen des Patentanspruchs 1. Bezüglich der Vorrichtung zum Einlegen einer Parksperre eines Kraftfahrzeugautomatikgetriebes wird die Aufgabe gelöst durch eine Vorrichtung mit allen Merkmalen des Patentanspruchs 13. Die Aufgabe wird ferner gelöst durch ein Kraftfahrzeug gemäß Anspruch 14. Vorteilhafte Ausgestaltungen der Erfindung finden sich in den Unteransprüchen.

Der erfindungsgemäße Aktuator weist dabei einen eine Antriebswelle antreibenden Antrieb, ein mit der Antriebswelle in Wirkverbindung stehendes erstes Betätigungselement zum Betätigen einer Schalteinrichtung und ein Federelement auf, wobei das Federelement einerseits an einem Gehäusebauteil des Aktuators abstützbar ist und sich andererseits an einem zum Spannen des Federelementes ausgebildeten zweiten Betätigungselement abstützt, wobei ein mittels der Antriebswelle antreibbares und drehbar gelagertes Drehelement vorgesehen ist.

Die Erfindung zeichnet sich nunmehr dadurch aus, dass ein weiteres Betätigungselement zum Betätigen der Schalteinrichtung vorgesehen ist, welches mit dem ersten Betätigungselement in Wirkverbindung steht und zwischen dem ersten Betätigungselement und dem Betätigungselement der Schalteinrichtung eine Übersetzungseinrichtung mit einem Übersetzungselement vorgesehen ist.

Zum Ein- und Auslegen der Parksperre eines Kraftfahrzeugautomatikgetriebes wird ein sogenannter Verstellweg benötigt. Dieser Verstellweg ist abhängig von der Getriebevariante und/oder des Fahrzeugherstellers, so dass eine Vielzahl unterschiedliche Verstellwege zum Ein- und Auslegen der Parksperre existieren. Der benötigte Verstellweg kann sich bei verschiedenen Herstellern um den Faktor drei bis vier unterscheiden.

Erfindungsgemäß lässt sich aufgrund der Übersetzungseinrichtung mit Übersetzungselement ein gegenüber bekannten Aktuatoren vergleichsweise größerer Verstellweg erreichen, so dass der erfindungsgemäße Aktuator bzw. die erfindungsgemäße Vorrichtung für eine Vielzahl von Getriebevarianten und/oder Fahrzeugherstellern eingesetzt werden kann, ohne am Aktuar selbst spezielle Anpassungen an die unterschiedlichen Verstellwege vorzunehmen.

Ferner zeichnet sich die Erfindung dadurch aus, dass ein mittels der Antriebswelle antreibbares und drehbar gelagertes Drehelement vorgesehen ist. Dieses Drehelement ist einerseits mit einer ersten Steuerkurve, welche mit dem ersten Betätigungselement wirkverbunden ist, und andererseits mit einer zweiten Steuerkurve zum Spannen des Federelementes ausgebildet.

Das Federelement hat dabei die Funktion, beim Vorliegen einer Störung des Aktuators oder bei Spannungsausfall, die P-Stufe einzulegen. Dazu ist das Federelement mittels des zweiten Betätigungselementes auch mit dem ersten Betätigungselement wirkverbindbar, so dass auf Grund der durch die Vorspannung des Federelementes aufgebrachten Rückstellkraft das erste Betätigungselement entlang der ersten Steuerkurve in die P-Stufe zurückführbar ist. Insbesondere kann das zweite Betätigungselement als Mitnehmer für das erste Betätigungselement ausgebildet sein.

Zum Verlassen der P-Stufe und Einlegen der unterschiedlichen Schaltstufen, beispielsweise R, N, D, ist das Drehelement mittels des Antriebes und der Antriebswelle so verdrehbar, dass die erste Steuerkurve das erste Betätigungselement auf Grund des Wirkkontaktes mit der ersten Steuerkurve bewegen kann. Eine den Aktuator und das Automatikgetriebe verbindende Schalteinrichtung, beispielsweise mit einem Schaltseilzug, ist dazu ausgebildet, die am Aktuator erzeugte Bewegung zu dem Automatikgetriebe weiterzuleiten, so dass die P-Stufe verlassen und unterschiedliche Schaltstufen, beispielsweise R, N, D eingestellt werden können.

Dazu kann die erste Steuerkurve verschiedene Steigungen für die Schaltbewegung bzw. zum Einlegen der Schaltstufen aufweisen. Die Steigung der Steuerkurve kann beispielsweise so ausgelegt sein, dass ausreichend Stellkraft zum Auslegen der Parksperre mittels des Aktuators oder einer Notverstelleinrichtung unter allen Bedingungen erzeugt werden kann. Die Stellkraft setzt sich dabei im Wesentlichen aus der im Getriebe erforderlichen Mindestverstellkraft zum Einlegen unterschiedlicher Schaltstufen und ggf. der Rückstellkraft des Federelementes zusammen, gegen die der Aktuator bereits beim Verlassen der P-Stufe arbeitet. Beispielsweise kann eine solche Stellkraft etwa 500N betragen. Im Falle eines Notbetriebs werden im Gegenzug das Drehelement und der Motor durch die Steigung der ersten Steuerkurve im Zusammenwirken mit den ersten und zweiten Betätigungselementen des Aktuators unter dem Einfluss der von dem Federelement aufgebrachten Federkraft zurückgedreht.

Die erfindungsgemäße Vorrichtung zum Einlegen einer Parksperre in einem Automatikgetriebe eines Kraftfahrzeuges weist dabei einen derartigen erfindungsgemäßen Aktuator, insbesondere einen Parksperraktuator auf.

Durch den Einsatz eines erfindungsgemäßen Aktuators in einer Vorrichtung zum Einlegen einer Parksperre in einem Automatikgetriebe eines Kraftfahrzeuges ist es nunmehr gewährleistet, dass das Federelement immer vorgespannt werden kann, bevor die P-Stufe des Automatikgetriebes des Kraftfahrzeuges verlassen wird. Mittels der zweiten Steuerkurve und des zweiten Eingriffselementes des zweiten Betätigungselementes ist es nämlich nunmehr möglich, das Federelement vorzuspannen, ohne dass sich die Position des ersten Betätigungselementes ändert. Hierdurch ist es ermöglicht, das Federelement vorzuspannen, während sich das erste Betätigungselement beim Einsatz eines derartigen Aktuators in einem Kraftfahrzeug mit einem Automatikgetriebe in einer derartigen Position befindet, dass das Automatikgetriebe des Kraftfahrzeuges in der P-Stufe eingestellt ist.

Das Drehelement kann in der Reichweite seiner Drehbewegung zwischen einer maximalen negative und einer maximalen positiven Drehposition aufgrund der Ausgestaltung der ersten und/oder der zweiten Steuerkurve beschränkt sein, so dass beispielsweise eine halbe Drehung in jeweils eine Drehrichtung, also etwa +180° oder -180° möglich sind.

Gemäß einer ersten vorteilhaften Ausgestaltung der Erfindung ist die Form des Übersetzungselements wenigstens auf einer Seite unsymmetrisch ausgebildet. Es kann beispielsweise vorgesehen sein, dass das Übersetzungselement ungleichförmig ausgebildet ist. Auf diese Weise kann das Übersetzungsverhältnis des Übersetzungselements variiert werden, beispielsweise kann zu Beginn einer Bewegung eine höhere Kraft, als die Kraft des Federelements, übertragen und im weiteren Verlauf dann ein größerer Verstellweg bereitgestellt werden. Dies ist insbesondere zum Auslegen der P-Stufe und Überführen der Schalteinrichtung in die R-Stufe denkbar. Es ändert sich demnach die Übersetzung beim Betätigen, da im weiteren Verlauf der Verstellbewegung keine hohe Kraft mehr benötigt wird, sondern dagegen ein größerer Verstellweg. Durch die Übersetzung lässt sich die erforderliche Kraft im benötigten Bereich abbilden.

In einer Weiterbildung der Erfindung ist das Übersetzungselement als Hebel, insbesondere als gekröpfter Hebel oder Winkelhebel, ausgebildet. Bei dieser Variante des Übersetzungselements handelt es sich um eine besonders einfach herzustellende Ausgestaltung. Mit dem Winkelhebel kann die lineare Federkraft in eine nicht lineare Federkraft übersetzt werden.

Gemäß einer weiteren Variante der Erfindung ist der Hebel mehrteilig, vorzugsweise als starre Einheit, ausgebildet.

Unterschieden werden prinzipiell einseitige und zweiseitige Hebel, je nachdem, ob die Kräfte nur auf einer Seite oder auf beiden Seiten des Drehpunktes des Hebels angreifen. Weiter gibt es neben dem geraden Hebel auch noch den geknickten Hebel oder Winkelhebel.

Bei zweiseitigen Hebeln liegen die Angriffspunkte der Kräfte, von der Drehachse aus betrachtet, auf verschiedenen Seiten des Hebels. An einem einseitigen Hebel liegt die Drehachse am Rand der Hebelstange, so dass die Angriffspunkte aller wirkenden Kräfte, von der Drehachse aus betrachtet, auf der gleichen Seite des Hebels liegen. Ein Hebel mit einer gewinkelten Stange wird Winkelhebel genannt. Je nachdem, an welcher Stelle sich die Drehachse befindet, gleicht ein Winkelhebel einem einseitigen oder zweiseitigen Hebel.

Für eine besonders einfache Übersetzung der Kraft bzw. des Verstellweges zum Ein- oder Auslegen einer Parksperre ist das Übersetzungselement an dem ersten Betätigungselement und/oder an dem Betätigungselement der Schalteinrichtung aufgenommen.

Für den Fall, dass es sich bei dem Übersetzungselement um einen Hebel, beispielsweise um einen Winkelhebel handelt, kann ein Hebelarm an dem ersten Betätigungselement und der weitere Hebelarm an dem Betätigungselement der Schalteinrichtung aufgenommen sein, so dass die Übersetzung auf einfache Weise realisiert wird. Der Hebel ist demnach an zwei Anlenkstellen angeordnet.

Gemäß einer Weiterbildung ist das Übersetzungselement um wenigstens eine Drehachse drehbar gelagert, wobei die Drehachse insbesondere zwischen einer Anlenkstelle des Übersetzungselements an dem ersten Betätigungselement und einer Anlenkstelle des Übersetzungselements an dem weiteren Betätigungselement der Schalteinrichtung angeordnet ist. Auf diese Weise findet eine Druckübertragung zum Einlegen der Parksperre statt.

Alternativ kann auch vorgesehen sein, dass die wenigstens eine Drehachse mit wenigstens einer Anlenkstelle zusammenfällt oder dass die wenigstens eine Drehachse außerhalb des Bereiches zwischen den Anlenkstellen liegt. Für den zweiten Fall, dass die Drehachse außerhalb des Bereiches zwischen den Anlenkstellen liegt, findet eine Zugübertragung zum Auslegen der Parksperre statt. Auf diese Weise wird zu Beginn der Bewegung eine vergleichsweise höhere Kraft auf das Übersetzungselement ausgeübt, um aus der Parksperre herauszukommen. Im weiteren Verlauf der Bewegung ist dann ein größerer Verstellweg vorgesehen. Durch die Übersetzung lässt sich die erforderliche Kraft im benötigten Bereich abbilden.

Wie erwähnt, kann der Hebel einteilig oder zweiteilig ausgestaltet sein. Falls der Hebel zweiteilig aufgebaut ist, würde er sich um die - außerhalb liegende - Drehachse drehen.

Gemäß einer weiteren vorteilhaften Ausgestaltung der Erfindung ist die Drehachse an einem Ende des Betätigungselements vorgesehen.

Eine weitere vorteilhafte Ausgestaltung der Erfindung sieht vor, dass das Übersetzungselement innerhalb eines Gehäuses des Aktuators angeordnet ist.

Gemäß einer alternativen Ausgestaltung des Aktuators kann das wenigstens eine Übersetzungselement als, vorzugsweise exzentrisch angeordnete, Zahnradpaarung ausgebildet sein. Insbesondere ist es denkbar, dass die Zahnstangen für die Zahnräder der Zahnradpaarung an dem weiteren Betätigungselement zum Betätigen der Schalteinrichtung und dem ersten Betätigungselement angeordnet sind. Durch diese Ausgestaltung ist eine Betätigung in Zugrichtung gewährleistet.

In einer weiteren vorteilhaften Ausgestaltung der Erfindung ist vorgesehen, dass das Übersetzungselement als Mehrgelenk, insbesondere als trapezförmig angeordnetes Viergelenk ausgebildet ist.

Ferner kann vorgesehen sein, dass bei einer Drehung des Drehelementes von 0° in Richtung der maximalen positiven Winkelposition, bspw. bis zu 180°, mittels der ersten Steuerkurve und des ersten Eingriffselementes des ersten Betätigungselementes unterschiedliche Schaltstufen einer solchen Schalteinrichtung einstellbar sind. Hierdurch ist es ermöglicht, dass unterschiedliche Schaltstufen eines Automatikgetriebes eingestellt werden können, ohne dass dabei gleichzeitig das Federelement gespannt werden muss, da diese Vorspannung des Federelementes bereits durch das zuvor beschriebene Verdrehen des Drehelementes in seine maximale negative Drehposition, bspw. von 0° bis -180° erfolgt. Damit beim Zurückdrehen des Drehelementes aus seiner maximalen Winkelposition, bspw. bei -180°, bis 0° diese Vorspannung erhalten bleibt, ist in vorteilhafterweise eine Halteeinrichtung, insbesondere eine elektrische Haltemagneteinrichtung vorgesehen, mit welcher das unter Aufbau einer Rückstellkraft gespannte Federelement in seiner Position gehalten wird. Somit ist ein Spannen des Federelementes während des Einlegens verschiedener Schaltstufen aus der P-Stufe heraus nicht erforderlich, da dies schon vorab erfolgt ist.

Um eine besonders einfache konstruktive Ausgestaltung des Drehelementes zur Verfügung zu stellen, hat es sich bewährt, dass das Drehelement als Kreisscheibe ausgebildet ist, an welcher die beiden Steuerkurven auf jeweils einer der gegenüberliegenden Flächen der Kreisscheibe angeordnet sind. Insofern können die Steuerkurven mittels der entsprechenden Eingriffselemente problemlos angeordnet werden, ohne dass störende Einflüsse der jeweils anderen Steuerkurve beziehungsweise des dazu korrespondierenden Eingriffselementes berücksichtigt werden müssen.

Sollte das Federelement beim Herausführen aus der P-Stufe einmal nicht vorgespannt sein, so ist die erste Steuerkurve derart ausgebildet, dass beim Verdrehen des Drehelementes von seiner Winkelposition 0° bis zu seiner maximalen positiven Winkelposition bei bis zu +180° das Federelement unter Aufbau einer Rückstellkraft gespannt wird. Dabei erfolgt die Vorspannung des Federelementes insbesondere direkt nach dem Verlassen der P-Stufe, sodass die sofort zur Verfügung gestellte Rückstellkraft des Federelementes ausreicht, das erste Betätigungselement wieder in die P-Stufe zurückzuführen.

Dabei hat es sich weiterhin als vorteilhaft erwiesen, dass auf der Antriebswelle eine Schnecke angeordnet ist, durch welche eine Zahnradanordnung antreibbar ist, die wiederum das Drehelement antreibt. Dabei kann das Drehelement selbst Teil dieser Zahnradanordnung sein, wobei es auch möglich ist, dass die Zahnradanordnung auch aus nur einem Zahnrad besteht.

Alternativ ist es natürlich auch denkbar, dass die Zahnradanordnung aus mehreren Zahnrädern besteht, die miteinander in Wirkverbindung stehen, wobei dann ein Zahnrad als Kreisscheibe ausgebildet ist, welche die entsprechenden Steuerkurven auf ihren gegenüberliegenden Flächen aufweist.

Selbständig geschützt sein soll auch eine Vorrichtung zum Einlegen einer Parksperre eines Kraftfahrzeugautomatikgetriebes mit einem zuvor beschriebenen Aktuator, insbesondere einem Parksperraktuator.

Zudem soll selbstständig auch ein Kraftfahrzeug mittels einer solchen Vorrichtung geschützt sein, wobei das Kraftfahrzeug ein Automatikgetriebe und eine vorstehend beschriebene Vorrichtung zum Einlegen einer Parksperre des Automatikgetriebes aufweist.

Weitere Ziele, Vorteile, Merkmale und Anwendungsmöglichkeiten der vorliegenden Erfindung ergeben sich aus der nachfolgenden Beschreibung eines Ausführungsbeispiels anhand der Zeichnung.

Dabei zeigen zum Teil schematisch:
- Figur 1: ein erstes Ausführungsbeispiel eines erfindungsgemäßen Aktuators mit einem Übersetzungselement in einer ersten Stellung,
- Figur 2: den Aktuator gemäß Figur 1 mit Übersetzungselement in einer zweiten Stellung,
- Figur 3: eine Detailansicht eines Ausschnitts des Aktuators mit Übersetzungselement gemäß Figur 1 und 2,
- Figur 4: ein zweites Ausführungsbeispiel des Aktuators mit Übersetzungselement in einer ersten Stellung,
- Figur 5: den Aktuator gemäß Figur 4 mit Übersetzungselement in einer zweiten Stellung,
- Figur 6: eine Detailansicht eines Ausschnitts des Aktuators mit Übersetzungselement gemäß Figur 4 und 5 und
- Figur 7: eine weitere Ausführung des Übersetzungselements.

Gleiche oder gleichwirkende Bauteile werden in den nachfolgend dargestellten Figuren der Zeichnung anhand einer Ausführungsform mit Bezugszeichen versehen, um die Lesbarkeit zu verbessern.

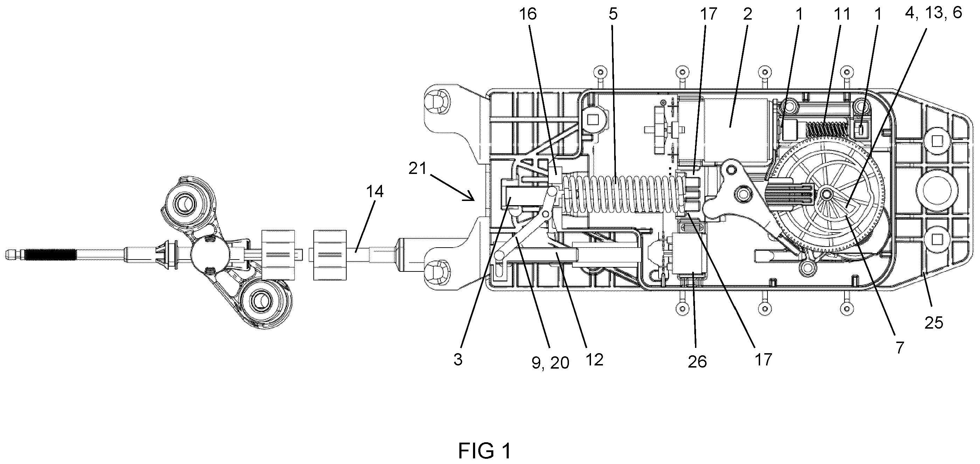

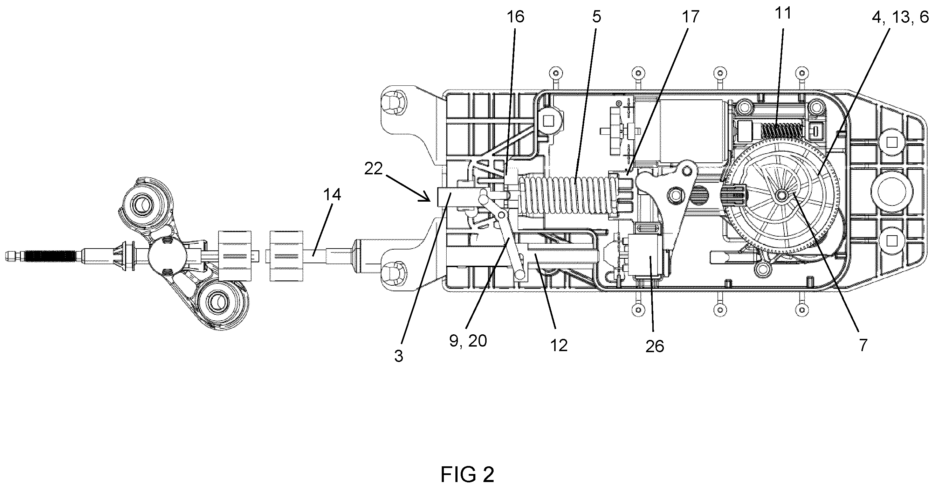

Figur 1 sowie auch die Figuren 2, 4 und 5 zeigen einen in einem Gehäuse angeordneten erfindungsgemäßen Aktuator, welcher auf der Gehäuseplatte 25 angeordnet und mit einem - nicht dargestellten - Gehäusedeckel abgedeckt ist. Sichtbar ist in dieser Darstellung noch ein Seilzug 14, mittels dem verschiedene Schaltstufen eines Automatikgetriebes eines Kraftfahrzeuges einstellbar sind. Der Seilzug 14 ist dabei in Wirkverbindung mit einem ersten Betätigungselement 3 zum Betätigen der Schalteinrichtung des Kraftfahrzeugautomatikgetriebes des Kraftfahrzeuges.

Ferner ist gemäß den Figuren 1, 2, 4 und 5 deutlich ein als Zahnrad 13 ausgebildetes Drehelement 4 zu erkennen, welches zudem als Kreisscheibe 6 ausgebildet ist. Das Drehelement 4 ist dabei in seinem Mittelpunkt drehbar gelagert und weist im vorliegenden Ausführungsbeispiel eine Steuerkurve 7 auf. Ferner weist das Drehelement 4 vorliegend eine zweite Steuerkurve auf. Es kann auch vorgesehen sein, dass das Drehelement 4 auf seinen gegenüberliegenden Flächen zwei unterschiedliche Steuerkurven aufweist. Das Zahnrad 13, welches auch Teil einer Zahnradanordnung sein kann, kämmt im vorliegenden Fall mit einer Schnecke 11 einer Antriebswelle 1 eines Antriebes 2.

Der Aktuator kann sich in einer Stellung befinden, die der Stellung der P-Stufe eines Automatikgetriebes eines Kraftfahrzeuges und der neutralen Winkelposition 0° des Drehelementes 4 entspricht. Ein Eingriffselement des ersten Betätigungselementes 3 befindet sich wirkverbunden in Eingriff mit der Steuerkurve 7. Wird nun mittels des Antriebes 2, der Antriebswelle 1 und der Schnecke 11 das als Zahnrad 13 ausgebildete Drehelement 4 verdreht, so wird das Betätigungselement 3 aufgrund des Eingriffs des Eingriffselementes in die Steuerkurve 7 in Richtung des Gehäusebauteils 16 bewegt, sodass sich mittels der von dem Seilzug 14 betätigten und hier nicht näher dargestellten Schalteinrichtung des Automatikgetriebes dieses aus seiner P-Stufe heraus- oder hineinbewegt wird und unterschiedliche Schaltstufen, beispielsweise R, N, D, einstellbar sind. Das Drehelement 4 ist dabei in seiner Drehbewegung aufgrund der Steuerkurve 7 beschränkt, sodass eine Drehung um in etwa +180° oder einen anderen Wert möglich ist.

Im Betrieb eines Kraftfahrzeuges kann das Federelement 5, nach dem es vorgespannt wurde, mithilfe einer elektrischen Haltemagneteinrichtung 26 in der vorgespannten Position gehalten werden. Mit anderen Worten wird dabei die Vorspannung des Federelementes 5 in dessen Spannungsstellung während der Drehung des Drehelementes 4 mithilfe der Haltemagneteinrichtung 26 aufrechterhalten.

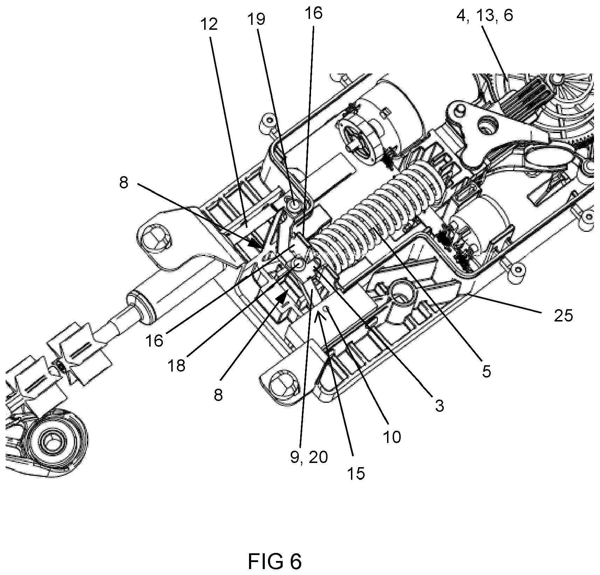

Wie aus den Figuren 1 bis 6 hervorgeht, weist der Aktuator ein weiteres Betätigungselement 12 zum Betätigen der Schalteinrichtung auf, welches mit dem ersten Betätigungselement 3 in Wirkverbindung steht. Zwischen dem ersten Betätigungselement 3 und dem Betätigungselement 12 der Schalteinrichtung ist eine Übersetzungseinrichtung 8 mit einem Übersetzungselement 9 vorgesehen.

Zum Ein- und Auslegen der Parksperre eines Kraftfahrzeugautomatikgetriebes wird ein sogenannter Verstellweg benötigt. Dieser Verstellweg ist abhängig von der Getriebevariante und/oder des Fahrzeugherstellers, so dass eine Vielzahl unterschiedliche Verstellwege zum Ein- und Auslegen der Parksperre existieren. Aufgrund der erfindungsgemäßen Übersetzungseinrichtung 8 mit Übersetzungselement 9 lässt sich ein gegenüber bekannten Aktuatoren vergleichsweise größerer Verstellweg erreichen, so dass der erfindungsgemäße Aktuator bzw. die erfindungsgemäß Vorrichtung für eine Vielzahl von Getriebevarianten und/oder Fahrzeugherstellern eingesetzt werden kann, ohne spezielle Anpassungen an die unterschiedlichen Verstellwege vorzunehmen.

Gemäß der vorliegenden Ausführungsformen ist die Form des Übersetzungselements wenigstens auf einer Seite unsymmetrisch ausgebildet. Es kann beispielsweise vorgesehen sein, dass das Übersetzungselement ungleichförmig ausgebildet ist.

Auf diese Weise kann das Übersetzungsverhältnis des Übersetzungselements variiert werden, beispielsweise kann zu Beginn einer Bewegung eine höhere Kraft, als die Feder, übertragen und im weiteren Verlauf ein größerer Verstellweg bereitgestellt werden. Dies ist insbesondere zum Auslegen der P-Stufe und Überführen der Schalteinrichtung in die R-Stufe denkbar. Es ändert sich demnach die Übersetzung, da im weiteren Verlauf der Verstellbewegung keine hohe Kraft mehr benötigt wird, sondern dagegen mehr Verstellweg.

Gemäß den Figuren 1 bis 6 ist das Übersetzungselement 9 als Hebel 20, insbesondere als gekröpfter Hebel oder Winkelhebel, ausgebildet, wobei die lineare Federkraft in eine nicht lineare Federkraft übersetzt wird. Für eine besonders einfache Übersetzung der Kraft bzw. des Verstellweges zum Ein- oder Auslegen einer Parksperre ist das Übersetzungselement 9 an dem ersten Betätigungselement 3 und/oder an dem Betätigungselement 12 der Schalteinrichtung aufgenommen.

Bei zweiseitigen Hebeln liegen die Angriffspunkte der Kräfte, von der Drehachse aus betrachtet, auf verschiedenen Seiten des Hebels. An einem einseitigen Hebel liegt die Drehachse am Rand der Hebelstange, so dass die Angriffspunkte aller wirkenden Kräfte, von der Drehachse aus betrachtet, auf der gleichen Seite des Hebels liegen. Ein Hebel mit einer gewinkelten Stange wird Winkelhebel genannt. Je nachdem, an welcher Stelle sich die Drehachse befindet, gleicht ein Winkelhebel einem einseitigen oder zweiseitigen Hebel.

Wie den Figuren 1 bis 6 zu entnehmen ist, kann ein Hebelarm des Hebels 20 an dem ersten Betätigungselement 3 und der weitere Hebelarm an dem Betätigungselement 12 der Schalteinrichtung aufgenommen sein, so dass die Übersetzung auf einfache Weise realisiert wird. Der Hebel 20 ist demnach an zwei Anlenkstellen 18, 19 angeordnet.

Vorliegend ist das Übersetzungselement 9 um wenigstens eine Drehachse 10 drehbar gelagert.

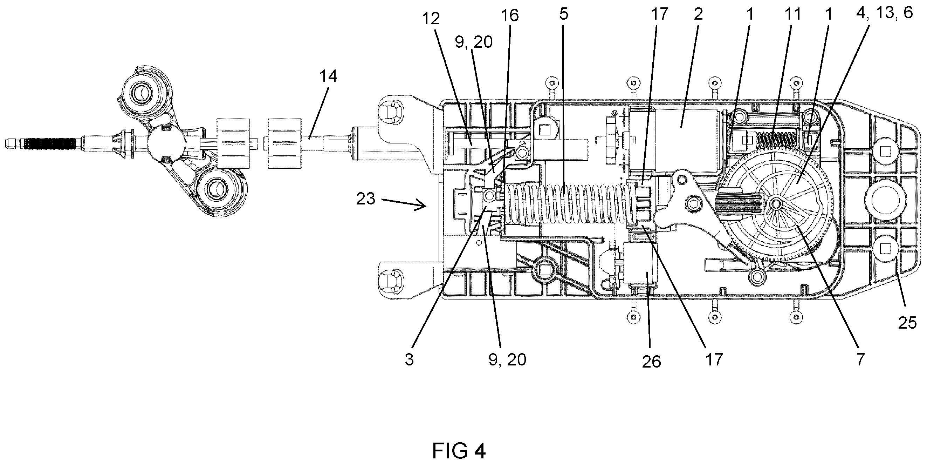

Die Ausführungsform des Aktuators gemäß Figuren 1 bis 3 unterscheidet sich von der gemäß Figuren 4 bis 6 durch das als Hebel 20 ausgebildete Übersetzungselement 9.

Figur 1 zeigt den Aktuator mit einem Übersetzungselement 9, wobei die Drehachse 10 des Übersetzungselements 9 zwischen einer Anlenkstelle 18 des Übersetzungselements 9 an dem ersten Betätigungselement 3 und einer Anlenkstelle 19 des Übersetzungselements 9 an dem weiteren Betätigungselement 12 der Schalteinrichtung angeordnet ist. Auf diese Weise findet eine Druckübertragung zum Einlegen der Parksperre statt.

Gemäß Figur 1 ist das Federelement 5 in einer entspannten, ersten Stellung 21 und in Figur 2 in einer gespannten, zweiten Stellung 22 dargestellt, wobei in dieser Stellung die Parksperre eingelegt ist und eine Vorspannung des Federelementes 5, beispielsweise mithilfe der oben erwähnten Haltemagneteinrichtung 26 aufrechterhalten wird.

Bei der Bewegung des Übersetzungselements 9 und somit des ersten Betätigungselements 3 und des weiteren Betätigungselements 12 der Schalteinrichtung wird derart auf den Seilzug 14 eingewirkt, dass die Parksperre durch eine Druck- bzw. Schubbewegung des Seilzugs 14 eingelegt wird.

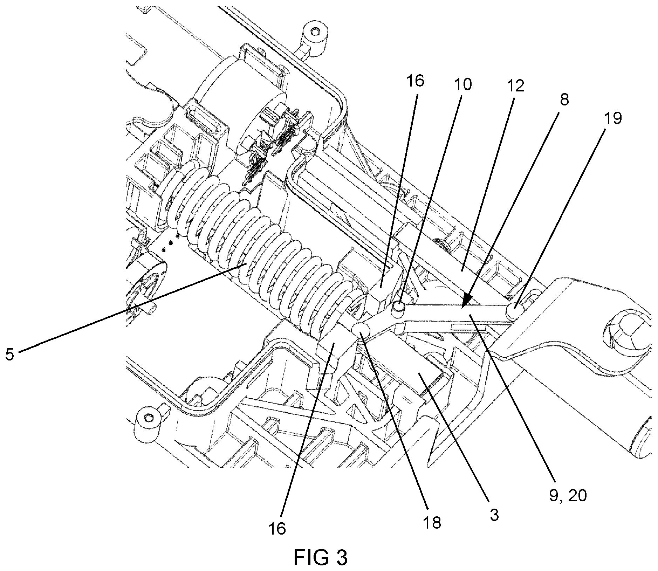

Figur 3 zeigt eine Detailansicht des Übersetzungselements 9 in der Stellung gemäß Figur 1.

Alternativ kann auch vorgesehen sein, dass die wenigstens eine Drehachse mit wenigstens einer Anlenkstelle 18,19 zusammenfällt. Gemäß Figuren 4 bis 6 liegt die wenigstens eine Drehachse 10 des Übersetzungselements 9 außerhalb des Bereiches zwischen den Anlenkstellen 18, 19, so dass eine Zugübertragung zum Auslegen der Parksperre stattfindet. Auf diese Weise wird zu Beginn der Bewegung eine vergleichsweise höhere Kraft auf das Übersetzungselement ausgeübt, um aus der Parksperre herauszukommen. Im weiteren Verlauf der Bewegung ist dann ein vergleichsweise größerer Verstellweg vorgesehen.

Gemäß Figur 4 ist eine erste Stellung 23 des Übersetzungselements 9 dargestellt. Hier ist die Parksperre ausgelegt, das Federelement 5 ist entspannt. Die Haltemagneteinrichtung 26 ist offen, so dass keine Vorspannung des Federelementes 5 mithilfe der Haltemagneteinrichtung 26 aufrechterhalten wird.

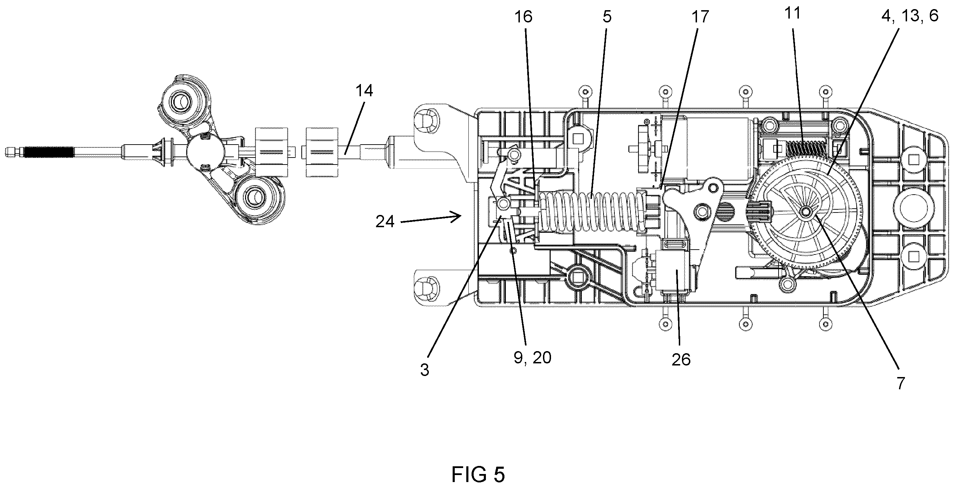

Bei der zweiten Stellung 24 des Aktuators gemäß Figur 5 ist die Feder gespannt und es wird eine Vorspannung des Federelementes 5 mithilfe der Haltemagneteinrichtung 26 aufrechterhalten. Im Gegensatz zu der Ausführungsform gemäß Figuren 1 bis 3 wird findet nun eine Zugbewegung, statt einer Druck- bzw. Schubbewegung statt.

Gemäß der Ausführungsform entsprechend den Figuren 4 bis 6 ist die Drehachse an einem Ende des Betätigungselements vorgesehen. Im Übrigen kann vorgesehen sein, dass das Übersetzungselement 9, insbesondere der Hebel 20, mehrteilig ausgestaltet ist, aber dennoch eine starre Einheit bildet.

Vorliegend ist das Übersetzungselement 9 innerhalb eines Gehäuses des Aktuators angeordnet.

Gemäß einer alternativen, nicht dargestellten, Ausgestaltung des Aktuators kann das wenigstens eine Übersetzungselement 9 als, vorzugsweise exzentrisch angeordnete, Zahnradpaarung ausgebildet sein. Insbesondere ist es denkbar, dass die Zahnstangen für die Zahnräder der Zahnradpaarung an dem weiteren Betätigungselement 12 zum Betätigen der Schalteinrichtung und dem ersten Betätigungselement 3 angeordnet sind.

In einer weiteren - nicht dargestellten - vorteilhaften Ausgestaltung der Erfindung ist vorgesehen, dass das Übersetzungselement 9 als Mehrgelenk, insbesondere als trapezförmig angeordnetes Viergelenk ausgebildet ist.

In der Figur 1, aber auch in den Figuren 2, 4 und 5 ist weiterhin das erste Betätigungselement 3 erkennbar, welches einerseits mit dem Eingriffselement versehen ist, das zum Eingriff in die Steuerkurve 7 eingreift und anderseits mit dem Seilzug 14 einer Schalteinrichtung des Automatikgetriebes des Kraftfahrzeuges verbunden ist.

Das erste Betätigungselement 3 ist dabei verschiebbar in einem zweiten Betätigungselement 17 gelagert, welches einerseits mit einem zweiten Eingriffselement zum Eingriff in die - nicht dargestellte - zweite Steuerkurve versehen ist und sich andererseits an dem Federelement 5 abstützt.

Ferner ist in Figuren 1 bis 6 auch die Gehäuseplatte 25 dargestellt, auf welcher der Aktuator angeordnet ist. Weiterhin ist in der Darstellung der Figur 1 bis 6 erkennbar, dass sich das Federelement 5 einerseits an einem Gehäusebauteil 16 des Aktuators und andererseits an dem Betätigungselement 17 abstützt.

### Bezugszeichenliste

- 1: Antriebswelle
- 2: Antrieb
- 3: Betätigungselement
- 4: Drehelement
- 5: Federelement
- 6: Kreisscheibe
- 7: Steuerkurve
- 8: Übersetzungseinrichtung
- 9: Übersetzungselement
- 10: Drehachse des Übersetzungselements
- 11: Schnecke
- 12: weiteres Betätigungselement
- 13: Zahnrad
- 14: Seilzug
- 15: Ende des Übersetzungselements
- 16: Gehäusebauteil
- 17: Betätigungselement
- 18: Anlenkstelle
- 19: Anlenkstelle
- 20: Hebel
- 21: erste Stellung
- 22: zweite Stellung
- 23: erste Stellung
- 24: zweite Stellung
- 25: Gehäuseplatte
- 26: Haltemagneteinrichtung

## Patentansprüche

1. Aktuator mit
einem Gehäuse,
einem eine Antriebswelle (1) antreibenden Antrieb (2),
einem mit der Antriebswelle (1) in Wirkverbindung stehenden ersten Betätigungselement (3),
einem Federelement (5), welches einerseits an einem Gehäusebauteil (16) des Aktuators abstützbar ist und sich anderseits an einem zum Spannen des Federelementes (5) ausgebildeten zweiten Betätigungselement (17) abstützt, wobei ein mittels der Antriebswelle (1) antreibbares und drehbar gelagertes Drehelement (4) vorgesehen ist,
wobei das Drehelement (4) eine erste Steuerkurve (7), in welche ein erstes Eingriffselement des ersten Betätigungselements (3) eingreift, und eine zweite Steuerkurve aufweist, in welche ein zweites Eingriffselement des zweiten Betätigungselements (17) zum Spannen des Federelementes (5) eingreift, wobei die erste Steuerkurve (7) mit dem ersten Betätigungselement (3) wirkverbunden ist,
wobei das erste Betätigungselement (3) verschiebbar im zweiten Betätigungselement (17) gelagert ist, **dadurch gekennzeichnet, dass** ein weiteres Betätigungselement (12) zum Betätigen einer Schalteinrichtung mittels eines Seilzugs vorgesehen ist, welches mit dem ersten Betätigungselement (3) in Wirkverbindung steht und zwischen dem ersten Betätigungselement (3) und dem weiteren Betätigungselement (12) der Schalteinrichtung eine Übersetzungseinrichtung (8) mit einem Übersetzungselement (9) vorgesehen ist, wobei das Übersetzungselement (9) innerhalb des Gehäuses angeordnet ist .

2. Aktuator nach Anspruch 1, **dadurch gekennzeichnet, dass** die Form des Übersetzungselements (9) wenigstens auf einer Seite unsymmetrisch ausgebildet ist.

3. Aktuator nach Anspruch 1 oder 2, **dadurch gekennzeichnet, dass** das Übersetzungselement (9) als Hebel (20), insbesondere als gekröpfter Hebel oder Winkelhebel, ausgebildet ist.

4. Aktuator nach Anspruch 3, **dadurch gekennzeichnet, dass** der Hebel (20) mehrteilig, vorzugsweise als starre Einheit, ausgebildet ist.

5. Aktuator nach einem der Ansprüche 1 bis 4, **dadurch gekennzeichnet, dass** das Übersetzungselement (9) an dem ersten Betätigungselement (3) und/oder an dem weiteren Betätigungselement (12) des Aktuators aufgenommen ist.

6. Aktuator nach einem der Ansprüche 1 bis 5, **dadurch gekennzeichnet, dass** das Übersetzungselement (9) um wenigstens eine Drehachse (10) drehbar gelagert ist, wobei die Drehachse (10) insbesondere zwischen einer Anlenkstelle (18) des Übersetzungselements (9) an dem ersten Betätigungselement (3) und einer Anlenkstelle (19) des Übersetzungselements (9) an dem weiteren Betätigungselement (12) der Schalteinrichtung angeordnet ist.

7. Aktuator nach Anspruch 6, **dadurch gekennzeichnet, dass** die wenigstens eine Drehachse (10) mit wenigstens einer Anlenkstelle (18, 19) zusammenfällt oder dass die wenigstens eine Drehachse (10) außerhalb des Bereiches zwischen den Anlenkstellen (18, 19) liegt.

8. Aktuator nach Anspruch 6 oder 7, **dadurch gekennzeichnet, dass** die Drehachse (10) an einem Ende (15) des Betätigungselements (9) vorgesehen ist.

9. Aktuator nach einem der vorherigen Ansprüche, **dadurch gekennzeichnet, dass** das wenigstens eine Übersetzungselement (9) als, vorzugsweise exzentrisch angeordnete, Zahnradpaarung ausgebildet ist.

10. Aktuator nach Anspruch 9, **dadurch gekennzeichnet, dass** die Zahnstangen für die Zahnräder der Zahnradpaarung an dem weiteren Betätigungselement (12) zum Betätigen der Schalteinrichtung und dem ersten Betätigungselement (3) angeordnet sind.

11. Aktuator nach einem der vorherigen Ansprüche, **dadurch gekennzeichnet, dass** Übersetzungselement (9) als Mehrgelenk, insbesondere als trapezförmig angeordnetes Viergelenk ausgebildet ist.

12. Aktuator nach einem der vorhergehenden Ansprüche, **dadurch gekennzeichnet, dass** auf der Antriebswelle (1) eine Schnecke (11) angeordnet ist, durch welche über eine Zahnradanordnung (12) das Drehelement (4) antreibt.

13. Vorrichtung zum Einlegen einer Parksperre eines Kraftfahrzeugautomatikgetriebes mit einem Aktuator nach einem der Ansprüche 1 bis 12.

14. Kraftfahrzeug mit einem Automatikgetriebe und einer damit zusammenwirkenden Vorrichtung nach Anspruch 13.

## Claims

1. Actuator having
a housing,
a drive device (2) which drives a drive shaft (1),
a first actuating element (3) which is operatively connected to the drive shaft (1),
a spring element (5), which can be supported on one side on a housing component (16) of the actuator and is supported on the other side on a second actuating element (17) which is configured for stressing the spring element (5),
wherein a rotational element (4) is provided, which can be driven by means of the drive shaft (1) and which is rotatably mounted,
wherein the rotational element (4) has a first control cam (7), in which a first engagement element of the first actuating element (3) engages, and a second control cam, in which a second engagement element of the second actuating element (17) for stressing the spring element (5) engages, wherein the first control cam (7) is operatively connected to the first actuating element (3), wherein the first actuating element (3) is mounted movably in the second actuating element (17), **characterized in that** a further actuating element (12) is provided for actuating a switching device by means of a cable pull which is operatively connected to the first actuating element (3), and a transmission device (8) having a transmission element (9) is provided between the first actuating element (3) and the further actuating element (12) of the switching device, wherein the transmission element (9) is arranged within the housing.

2. Actuator according to Claim 1, **characterized in that** the form of the transmission element (9) is asymmetrical at least on one side.

3. Actuator according to Claim 1 or 2, **characterized in that** the transmission element (9) is configured as a lever (20), in particular as a cranked lever or angled lever.

4. Actuator according to Claim 3, **characterized in that** the lever (20) is configured in multiple parts, preferably as a rigid unit.

5. Actuator according to any one of Claims 1 to 4, **characterized in that** the transmission element (9) is received on the first actuating element (3) and/or on the further actuating element (12) of the actuator.

6. Actuator according to any one of Claims 1 to 5, **characterized in that** the transmission element (9) is mounted rotatably about at least one axis of rotation (10), wherein the axis of rotation (10) is arranged in particular between a linking point (18) of the transmission element (9) on the first actuating element (3) and a linking point (19) of the transmission element (9) on the further actuating element (12) of the switching device.

7. Actuator according to Claim 6, **characterized in that** the at least one axis of rotation (10) coincides with at least one linking point (18, 19) or **in that** the at least one axis of rotation (10) lies outside the region between the linking points (18, 19).

8. Actuator according to Claim 6 or 7, **characterized in that** the axis of rotation (10) is provided at one end (15) of the actuating element (9).

9. Actuator according to any one of the preceding claims, **characterized in that** the at least one transmission element (9) is configured as a gear pairing, preferably arranged eccentrically.

10. Actuator according to Claim 9, **characterized in that** the toothed racks for the gears of the gear pairing are arranged on the further actuating element (12) for actuating the switching device and the first actuating element (3).

11. Actuator according to any one of the preceding claims, **characterized in that** the transmission element (9) is configured as a multiple linkage, in particular as a trapezoidally arranged four-bar linkage.

12. Actuator according to any one of the preceding claims, **characterized in that** a worm (11) is arranged on the drive shaft (1), which worm is used to drive the rotational element (4) via a gear arrangement (12).

13. Device for engaging a parking lock of a motor-vehicle automatic transmission having an actuator according to any one of Claims 1 to 12.

14. Motor vehicle having an automatic transmission and a device interacting therewith according to Claim 13.

## Revendications

1. Actionneur avec
un boîtier,
un entraînement (2) entraînant un arbre d'entraînement (1),
un premier élément d'actionnement (3) qui est en liaison active avec l'arbre d'entraînement (1),
un élément de ressort (5) qui, d'une part, peut s'appuyer sur un composant (16) de boîtier de l'actionneur et, d'autre part, sur un deuxième élément d'actionnement (17) formé pour tendre l'élément de ressort (5),
un élément rotatif (4) pouvant être entraîné au moyen de l'arbre d'entraînement (1) et monté de manière à pouvoir tourner étant prévu, l'élément rotatif (4) comportant une première came de commande (7), avec laquelle un premier élément de prise du premier élément d'actionnement (3) vient en prise, et une deuxième came de commande, avec laquelle un deuxième élément de prise du deuxième élément d'actionnement (17) vient en prise pour tendre l'élément de ressort (5), la première came de commande (7) étant en liaison active avec le premier élément d'actionnement (3), le premier élément d'actionnement (3) étant monté de manière à pouvoir coulisser dans le deuxième élément d'actionnement (17), **caractérisé en ce qu'**un autre élément d'actionnement (12) est prévu pour actionner un dispositif de commutation au moyen d'un câble de traction, lequel est en liaison active avec le premier élément d'actionnement (3) et un dispositif de transmission (8) avec un élément de transmission (9) est prévu entre le premier élément d'actionnement (3) et l'autre élément d'actionnement (12) du dispositif de commutation, l'élément de transmission (9) étant disposé à l'intérieur du boîtier.

2. Actionneur selon la revendication 1, **caractérisé en ce que** la forme de l'élément de transmission (9) est formée asymétriquement au moins sur un côté.

3. Actionneur selon la revendication 1 ou 2, **caractérisé en ce que** l'élément de transmission (9) est formé comme un levier (20), en particulier comme un levier coudé ou un levier articulé.

4. Actionneur selon la revendication 3, **caractérisé en ce que** le levier (20) est formé en plusieurs parties, de préférence comme une unité rigide.

5. Actionneur selon l'une des revendications 1 à 4, **caractérisé en ce que** l'élément de transmission (9) est reçu sur le premier élément d'actionnement (3) et/ou sur l'autre élément d'actionnement (12) de l'actionneur.

6. Actionneur selon l'une des revendications 1 à 5, **caractérisé en ce que** l'élément de transmission (9) est monté de manière à pouvoir tourner autour d'au moins un axe de rotation (10), l'axe de rotation (10) étant disposé en particulier entre un point d'articulation (18) de l'élément de transmission (9) sur le premier élément d'actionnement (3) et un point d'articulation (19) de l'élément de transmission (9) sur l'autre élément d'actionnement (12) du dispositif de commutation.

7. Actionneur selon la revendication 6, **caractérisé en ce que** l'au moins un axe de rotation (10) coïncide avec au moins un point d'articulation (18, 19), ou que l'au moins un axe de rotation (10) est situé à l'extérieur de la zone entre les points d'articulation (18, 19).

8. Actionneur selon la revendication 6 ou 7, **caractérisé en ce que** l'axe de rotation (10) est prévu sur une extrémité (15) de l'élément d'actionnement (9).

9. Actionneur selon l'une des revendications précédentes, **caractérisé en ce que** l'au moins un élément de transmission (9) est formé comme une paire de roues dentées disposée de préférence de manière excentrique.

10. Actionneur selon la revendication 9, **caractérisé en ce que** les crémaillères pour les roues dentées de la paire de roues dentées sont disposées sur l'autre élément d'actionnement (12) pour actionner le dispositif de commutation et le premier élément d'actionnement (3).

11. Actionneur selon l'une des revendications précédentes, **caractérisé en ce que** l'élément de transmission (9) est formé comme une articulation multiple, en particulier comme une articulation trapézoïdale à quatre points.

12. Actionneur selon l'une des revendications précédentes, **caractérisé en ce qu'**est disposée sur l'arbre d'entraînement (1) une vis sans fin (11), par laquelle un ensemble de roues dentées (12) entraîne l'élément rotatif (4).

13. Dispositif pour engager un frein de stationnement d'une boîte de vitesses automatique de véhicule à moteur avec un actionneur selon l'une des revendications 1 à 12.

14. Véhicule à moteur avec une boîte de vitesses automatique et un dispositif selon la revendication 13 coopérant avec celle-ci.
